# EUROPEAN PATENT APPLICATION

(11) **EP 1 531 634 A1**
(43) Date of publication of application: **18.05.2005**
(21) Application number: 03292827.7
(22) Date of filing: 13.11.2003
(51) Int. Cl.: H04Q 3/00, H04Q 11/00, H04L 12/56

(54) **Method for restoring a connection in a telecommunication network**

(71) Applicant: ALCATEL, 75008 Paris (FR)
(72) Inventor: Belotti, Sergio, 20059 Vimercate (Milano) (IT); Canali, Massimo, 20059 Vimercate (Milano) (IT); Volonté, Stefano, 20052 Monza (Milano) (IT)
(74) Representative: Menzietti, Domenico

(57) **Abstract**

The present invention relates to a method for restoring a connection (1-4) in a telecommunication network provided with a management plane, a control plane and a transport plane, wherein a nominal path (1,2,3,4) corresponds to said connection (1-4); the method comprises the steps of :
a) detecting and localizing a fault (F) within the network affecting said connection (1-4),
b) identifying an alternative path (1,2,5,3,4) able to recover from said fault (F),
c) replacing the nominal path (1,2,3,4) with the alternative path (1,2,5,3,4) in the transport plane for realizing said connection (1-4);
in order to carry out step c), path segments (2-3) comprised in the nominal path but not in the alternative path are deleted in the transport plane, path segments (2-5,5-3) comprised in the alternative path but not in the nominal path are provisioned in the transport plane, and path segments (1-2,3-4) comprised in the nominal path and in the alternative path are maintained in the transport plane.

## Description

The present invention relates to a method for restoring a connection in a telecommunication network according to the preamble of claim 1.

Telecommunication networks like any system are subject to faults.

When a fault occurs within a telecommunication network, it is necessary to recover from the fault as soon as possible; time is very important nowadays (recovery time in the order of hundred of milliseconds) and will be even more important in the future (recovery time in the order of tens of milliseconds or even less).

In an operating telecommunication network several connections are active (e.g. hundreds or thousands) at the same time and each of these connections has a nominal path within the network; a fault may affect some of the active connections; the connections affected by the fault need to be restored.

In the future, many telecommunication networks will be provided with a management plane, a control plane and a transport plane.

The Telecommunication standardization sector of the International Telecommunication Union [ITU-T] issued, for example, a recommendation relating to an architecture for the Automatic Switched Optical Network [ASON] where these three plane are provided, i.e. recommendation G.8080/Y.1034 (11/2001). This recommendation specifies the architecture and requirements applicable to PDH, SDH and OTH, and describes the set of control plane components that are used to manipulate transport network resources in order to provide the functionality of setting up, maintaining and releasing connections.

Standardization activities in this field were and are carried out also by the Internet Engineering Task Force [IETF].

In a three planes telecommunication network, restored of a connection due to a fault comprises the steps of :
a) detecting and localizing said fault within the network affecting said connection,
b) identifying an alternative path able to recover from said fault,
c) replacing the nominal path with the alternative path in the transport plane for realizing said connection.

Step c) is a time consuming activity; according to the prior art, it requires deleting all the path segments belonging to the nominal path and provisioning all the path segments belonging to the alternative path.

Object of the present invention is to improve this activity so that it can be performed in shorter times leading to a shorter overall recovery time.

This object is achieved through the method having the functionalities set out in independent claim 1.

The basic idea underlying the present invention is :
- to delete in the transport plane path segments comprised in the nominal path but not in the alternative path,
- to provision in the transport plane path segments comprised in the alternative path but not in the nominal path,
- to maintain in the transport plane path segments comprised in the nominal path and in the alternative path. In this way, the replacement activity is much reduced.

Further advantageous functionalities of the method according to the present invention are set out in the dependent claims.

According to further aspects, the present invention relates also to a signalling protocol, to a control plane element, to a telecommunication network equipment, to a processor product program, to memory means having the features set out respectively in independent claims 9, 11, 12, 13, 14.

The present invention can be better understood through the following description to be considered in conjunction with the accompanying drawings, in which :
Fig.1 shows schematically a simplified telecommunication network,
Fig.2 shows schematically a telecommunication network equipment used for all the nodes of the network of Fig.1.

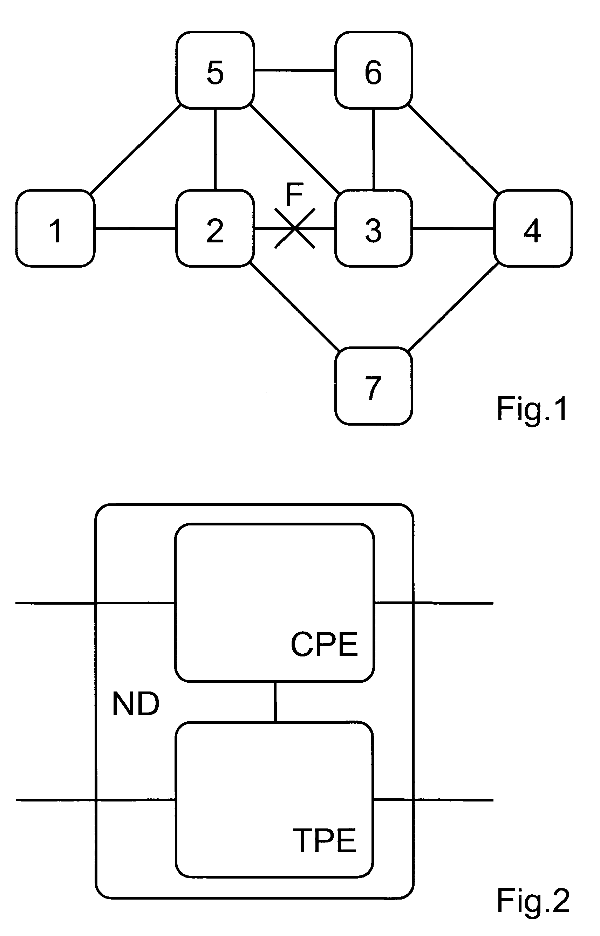

The network of Fig.1 consists of seven nodes, respectively labelled 1,2,3,4,5,6,7, and of eleven links, i.e. 5-6, 5-1, 5-2, 5-3, 6-3, 6-4, 1-2, 2-3, 3-4, 2-7, 4-7.

The equipment of Fig.2 comprises a transport plane element TPE and a control plane element CPE; this equipment has been labelled ND because it has been used for all the nodes of the telecommunication network of Fig.1; the two elements TPE and CPE are electrically linked (a simple cable, an ethernet cable, a bus, ...) and in communication between them. Element TPE is further linked to other transport plane elements of the telecommunication network and element CPE is further linked to other control plane elements of the telecommunication network; alternatively, the links of the control plane and the links of the transport plane may be realized through the same physical links but, for example, through different VCs or different wavelengths. It must be understood that Fig.2 is only a schematic example and that, in general, a telecommunication network comprises equipments of many different kinds and architectures.

It must be noted that, in Fig.1, only links between the transport plane elements are shown.

The method of the present invention serves for restoring a connection in a telecommunication network provided with a management plane, a control plane and a transport plane; obviously, there is a need to restore a connection when such connection is interrupted due to a fault within the network.

A connection corresponds to a nominal path within the network and, in general, the connection is realized through the nominal path; anyway, the present invention is applicable equivalently also in those cases when the connection is realized through a backup path.

The method of the present invention comprises the steps of
a) detecting and localizing a fault within the network affecting the connection to be restored,
b) identifying an alternative path able to recover from said fault,
c) replacing the nominal path with the alternative path in the transport plane for realizing said connection;
in order to carry out step c), path segments comprised in the nominal path but not in the alternative path are deleted in the transport plane, path segments comprised in the alternative path but not in the nominal path are provisioned in the transport plane, and path segments comprised in the nominal path and in the alternative path are maintained in the transport plane.

With reference to the example of Fig.1, a connection was realized between node 1 and node 4 through nominal path 1,2,3,4; a fault F occurred to link 2-3; the alternative path 1,2,5,3,4 was identified in order to recover from fault F. In this case and according to the present invention, the path segment realized through link 2-3 was deleted, the path segments realized through links 2-5 and 5-3 were provisioned, the paths segments realized through links 1-2 and 3-4 were maintained. The restoration process was successful as there was enough free transport capacity in links 2-5 and 5-3 for traffic associated to the connection affected by fault F.

The alternative path of this specific example is partially disjoint from the nominal path (in fact, links 1-2 and 3-4 and nodes 2 and 3 are common) and is pre-computed.

In this specific example, only one connection was considered. If other connections would have been affected by fault F, a similar process should have been repeated for all affected connections.

Additionally, it must be considered that the network of Fig. 1 may be a sub-network of a much bigger network.

According to its broadest definition, the present invention is independent from the method of identifying the alternative path.

Additionally, according to specific embodiments of the present invention, the restoration process may provide for the repetition of steps b) and c) if step c) fails; failure of step c) may be due, for example, to insufficient free transport capacity in the network resources associated to the alternative path.

According to the present invention, deleting path segments, provisioning path segments and maintaining path segments are typically carried out by elements of the control plane of the network. With reference to Fig.2, element CPE deletes, provisions and maintains a path segment (having node ND as one its ends) through the communication with element TPE.

According to the present invention, deleting path segments, provisioning path segments and maintaining path segments may be carried out by elements of the control plane of the network through a control plane signalling protocol. With reference to Fig.2, element CPE takes the decision to delete, provision or maintain a path segment (having node ND as one of its ends) as a consequence of communication between element CPE and other control plane elements of the telecommunication network; such communication is carried out through a signalling protocol. A known signalling protocol that can advantageously be used is RSVP; known alternatives are CR-LDP and O-PNNI.

The above protocols are subject to standardization; therefore, adding a feature to such protocols is always quite difficult. Therefore, in order to implement the method according to the present invention, it is advantageous to use the existing protocols as they are or, at least, with minimum changes.

At the light of the above observation, it is advantageous that maintaining a path segment is carried out through the sequence of a fake path segment deleting command and of a fake path segment provisioning command of the signalling protocol. In this way, formally the control plane operates in a traditional way (i.e. deleting all the path segments of the nominal path and provisioning all the path segments of the alternative path) but substantially some commands (i.e. the fake ones) are executed very quickly as they do not require much to do.

The fake commands may be very similar to the normal commands with the difference consisting of only a flag (one or two bits); the standardized syntax of a command usually provides some spare bits for future use.

In the case of the RSVP protocol, the deleting command is called "Path-Tear" and the provisioning command is called "Path-Request".

In case of "end-to-end restoration", the replacement activity is driven by the element of the control plane associated to the source node or the destination node of the nominal path.

In the example of Fig.1, the source node is node 1 and the destination node is node 4; node 2 detects fault F, notify node 1 of the fault, node 1 identifies an alternative path and sends to node 2 suitable commands (requiring e.g. deleting, provisioning, ...) through the signalling protocol; nodes 2 receives these commands carries out some actions and then sends other suitable commands to node 5; this repeats till node 4.

In case of "local restoration", the replacement activity is driven by an element of the control plane associated to an intermediate node of said nominal path; typically, this intermediate node is the node that detects the fault.

In the example of Fig.1, this node would probably be node 2 that is the node of the nominal path closest to fault F and to the source node, i.e. node 1.

The method according to the present invention is particularly advantageous if the alternative path identified for replacing the nominal path is partially disjoint from the nominal path. In this way, time is actually saved.

In order to save time, the identification activity may advantageously be reduced to a selection activity; in order to do that, a number the alternative paths need to be pre-computed and stored somewhere in the network, e.g. in the control plane elements.

In the above description, only for simplicity, no mention was made to the possibility that communication between elements comprises acknowledgement of receipt and/or confirmation of execution; anyway, these features are common in the field of telecommunications and can be used for implementing the present invention.

In the following, the further aspects of the present invention will be described.

As already anticipated, the method according to the present invention may be advantageously be implemented through a signalling protocol for the control plane of a telecommunication network, comprising:
- a fake path segment deleting command, and
- a fake path segment provisioning command.

These commands are such that, when received by a control plane element, do not lead to any communication with the transport plane element associated to said control plane element; they lead only to an update of the connectivity information stored in the control plane element.

The easiest way of implementing these fake commands provides that:
- the fake path segment deleting command consists of a standard path segment deleting command comprising a flag suitably set or reset, and
- the fake path segment provisioning command consists of a standard path segment provisioning command comprising a flag suitably set or reset.

The control plane element for a telecommunication network according to the present invention is adapted to carry out the method for restoring connections described above.

Such a control plane element may be a loose equipment; for example, it can be a computer, e.g. a workstation, provided with suitable communications means and suitably programmed.

Alternatively, such a control plane element may be comprised in a telecommunication network equipment together with other components. In the specific example of Fig.2, equipment ND comprises one control plane element CPE and one transport plane element TPE; different equipments may comprise a different number of elements. It must be noted that a control plane element may be associated to more than one transport plane element.

A control plane element usually comprises at least one processor; in order to carry out the method according to the present invention, the easiest way is to provide a memory for the processor and to store a suitable program.

Therefore, the present invention relates also to a processor program product comprising program code portions adapted for the implementation of the method described above when executed by a processor and to memory means storing such a program.

## Claims

1. Method for restoring a connection (1-4) in a telecommunication network, the network being provided with a management plane, a control plane and a transport plane, wherein a nominal path (1,2,3,4) corresponds to said connection (1-4), comprising the steps of :
a) detecting and localizing a fault (F) within the network affecting said connection (1-4),
b) identifying an alternative path (1,2,5,3,4) able to recover from said fault (F),
c) replacing the nominal path (1,2,3,4) with the alternative path (1,2,5,3,4) in the transport plane for realizing said connection (1-4);
**characterized by** the fact that, in order to carry out said step c), path segments (2-3) comprised in the nominal path but not in the alternative path are deleted in the transport plane, path segments (2-5,5-3) comprised in the alternative path but not in the nominal path are provisioned in the transport plane, and path segments (1-2,3-4) comprised in the nominal path and in the alternative path are maintained in the transport plane.

2. Method according to claim 1, wherein deleting path segments, provisioning path segments and maintaining path segments are carried out by elements of the control plane of the network.

3. Method according to claim 2, wherein deleting path segments, provisioning path segments and maintaining path segments are carried out by elements of the control plane of the network through a control plane signalling protocol.

4. Method according to claim 3, wherein maintaining a path segment is carried out through the sequence of a fake path segment deleting command and of a fake path segment provisioning command.

5. Method according to any of claims from 1 to 4, wherein said step c) is driven by the element of the control plane associated to the source node (1) or the destination node (4) of said nominal path.

6. Method according to any of claims from 1 to 4, wherein said step c) is driven by an element of the control plane associated to an intermediate node (2,3) of said nominal path.

7. Method according to any of the preceding claims, wherein, in said step b), a path is identified being partially disjoint from said nominal path.

8. Method according to any of the preceding claims, wherein, in said step b), identifying consists in selecting.

9. Signalling protocol for the control plane of a telecommunication network, **characterized by** the fact of comprising:
- a fake path segment deleting command,
- a fake path segment provisioning command.

10. Signalling protocol according to claim 9, wherein:
- the fake path segment deleting command consists of a standard path segment deleting command comprising a flag suitably set or reset,
- the fake path segment provisioning command consists of a standard path segment provisioning command comprising a flag suitably set or reset.

11. Control plane element for a telecommunication network **characterized by** the fact of being adapted to carry out the method according to any of claims from 1 to 8 for restoring connections.

12. Telecommunication network equipment comprising a control plane element according to claim 11.

13. Processor program product comprising program code portions adapted for the implementation of the method according to any of claims from 1 to 8 when executed by a processor.

14. Memory means storing a processor program product comprising program code portions adapted for the implementation of the method according to any of claims from 1 to 8 when executed by a processor.
